# EUROPEAN PATENT SPECIFICATION

(11) **EP 4 077 228 B1**
(45) Date of publication and mention of the grant of the patent: **19.02.2025**
(21) Application number: 19829575.0
(22) Date of filing: 20.12.2019
(51) Int. Cl.: C03B 37/083, C03B 37/095, C03B 37/08, C03B 37/092, B33Y 80/00

(54) **TIP PLATE AND CORRESPONDING BUSHING**
KOPFPLATTE UND ENTSPRECHENDE BUCHSE
PLAQUE D'EXTRÉMITÉ ET FILIÈRE CORRESPONDANTE

(43) Date of publication of application: 26.10.2022
(73) Proprietor: Cookson Precious Metals Ltd., Birmingham B1 3NZ (GB)
(72) Inventor: BECKER, Thilo, 52066 Aachen (DE); GRIES, Thomas, 52072 Aachen (DE); CAMPBELL, Ian, Warwickshire CV81EB (GB); DORVLO, Selassie, hull B92 7EF (GB)
(74) Representative: Patentanwälte Ruff, Wilhelm, Beier, Dauster & Partner mbB
(86) International application number: PCT/EP2019/086511
(87) International publication number: WO 2021/121614

(56) References cited:
- WO-A1-2008/023627
- DE-B- 1 023 860
- JP-A- H04 241 104
- US-A- 3 736 116
- US-A- 4 612 027

## Description

The invention relates to a tip plate for a bushing for receiving a high temperature melt and a corresponding bushing. The term "receiving" includes all kinds of preparing, storing and treating melts. In particular the bushing and its tip plate are intended for use in the production of fibres, such as glass fibres, mineral fibres, basalt fibres etc.

Prior art and the invention will be described hereinafter in more detail with reference to the production of and an apparatus for producing glass fibres, including textile glass fibres, although not limited to such use.

Glass fibres have been manufactured from a glass melt by means of bushings for more than 100 years. A general overview may be derived from "Design and Manufacture of Bushings for Glass Fibre Production", published by HVG Hüttentechnische Vereinigung der Deutschen Glasindustrie, Offenbach in connection with the glasstec 2006 exhibition in Düsseldorf.

A generic bushing may be characterized as a box like melting vessel (crucible), often providing a cuboid space and comprising a bottom, the so called tip plate, as well as a circumferential wall.

A generic tip plate comprises a body between an upper surface and a lower surface at a distance to the upper surface as well as a multiplicity of nozzles, extending between the upper surface and the lower surface and through said body, through which nozzles, also called tips, the melt may leave the bushing, in most cases under the influence of gravity.

While the nozzles often have an inner diameter of 1-4mm and a length of 2-10mm, the number of nozzles of one tip plate may be up to a few thousand. The arrangement of the nozzles in a generic tip plate varies and depends on the local conditions in a glass fibre plant.

The speed of the glass fibre emerging from a nozzle downwardly may be around 1000 meters per minute and allows the formation of very thin continuous glass fibre filaments with diameters of even less than 50µm, often 4 to 35µm.

To achieve the required melting temperatures, which may be of up to 1700⁰ Celsius, while at the same time achieving a substantially uniform melt temperature in the bushing, various heating methods have been developed, wherein the so called direct resistance heating [also called Joule heating] has been proven successfully. For this the bushing design comprises electrical connecting flanges at opposite wall segments, while the electrical energy is often introduced by means of water-cooled copper clamps.

Although various materials can be used for these bushings, Platinum alloys have been proven successfully because of their high temperature resistance, low oxidation and relatively good strength.

US4612027 A teaches a nozzle plate of a bushing with tip openings that are arranged inhomogeneously. JPH04241104 A discloses a tip plate, whereby the orifice is made of a different material and further supported by a washer. US3736116 A also relates to tip plates, this time with a hollow space in it. WO2008023627 A1 similarly teaches a tip plate, partially having a coating on the edges.

Nevertheless it has become apparent that under continuous operation the strength of the tip plate may decrease at very high temperatures (as they prevail in the glass fibre production) as well as under continuous mechanical load (caused by the glass melt on top of the tip plate).

It is an object of the invention to overcome as much as possible of the known drawbacks and in particular to provide a tip plate and corresponding bushing of increased service life and/or allowing a glass fibre production of high uniformity and quality.

The invention is based on the following findings:
The drawbacks mentioned above are based on mechanical and/or thermal problems, both deriving from the generic design of a tip plate, characterized by a cut (punched) metal sheet provided with through holes (tips), which have a nozzle function or serving to integrate discrete nozzles. The solid part of said known tip plate, i.e. the complete tip plate, except the through holes or nozzles respectively, is of uniform material, density, size and chemistry.

At first glance all this seems favorable to achieve uniform melting conditions and mechanical stability, but the contrary is true.

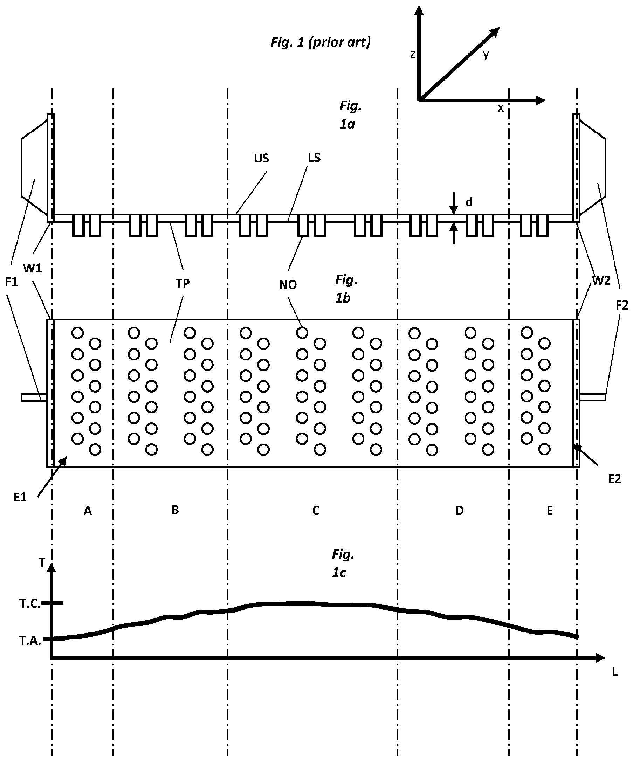

Fig 1, representing prior art, discloses in a very schematic way a typical temperature distribution over a generic tip plate TP with nozzles NO of a glass fibre bushing after a certain time of production.

In Fig. 1 an x-y-z- coordinate system is added for better illustration of the position and orientation of the various parts of the tip plate and associated construction elements. This coordinate system is valid as well for the other Fig. in this paper.

Fig. 1a represents a vertical cross section of the sheet-like tip plate in its operational position, being substantially horizontal. Insofar the tip plate extends in the x-y direction of the coordinate system. Walls W extend upwards (in the z-direction) from the tip plate TP.

The sheet has a substantially (production tolerances neglected) constant thickness (d) in the z-direction and between its upper surface US and its lower surface LS. Electrical contact flanges arranged at opposing wall parts W1, W2 are marked by F1, F2.

Fig. 1b is a schematic top view onto said tip plate TP. A few nozzles are symbolized by circles NO. Dotted lines identify five sections A, B, C, D and E between left and right ends E1, E2 of the tip plate (at wall parts W1, W2), wherein sections A and E feature the lowest body temperature (Fig. 1c: T.A), sections B and D a medium temperature profile, while the center section C is characterized by the highest average temperature (Fig. 1c: T.C) of all sections A-E. The temperature profile and temperature differences between ends E1, E2 are symbolized in Fig. 1c with a maximum temperature difference in this embodiment of around 30-40Kelvin.

These temperature variations lead to
- a loss of strength in the central section C with the danger of excessive bending of this part of the tip plate under the load of the glass melt
- different viscosities of the glass melt in sections A-E and thus
- variations in the diameter and quality of the glass fibre filaments drawn from the nozzles NO of sections A-E.

The invention goes a different way in providing a tip plate with different sections of different physical properties and/or different chemical compositions. The term "physical properties" refers to all structural changes, including sizes, dimensions, geometry, pores, pore distribution, as well as changes in strength. The term "chemical composition" refers to all changes of materials from which the tip plate is made, in particular alloy changes.

This allows to construct the tip plate with sections of different mechanical strength and/or different electrical resistance and/or different thermal conductivity where required. Sections of different properties are arranged next to each other in the x-y- direction of the coordinate system; in other words: Between opposing ends, or in a direction from one end to the other respectively, the tip plate provides adjacent sections of different physical and/or chemical properties. This design includes sharp boundaries (2-dimensional faces) between adjacent sections as well as smooth transition zones (3-dimensional) between adjacent sections of different properties to avoid extreme (sudden) changes within small areas of the tip plate. The term "section" does not refer to asymptotic small areas or just manufacturing tolerances.

Starting from the generic tip plate of Fig. 1 section C for example (the so so-called hot spot section) can by redesigned in the new way to lower the temperature in that section and/or to increase its mechanical strength.

A higher mechanical strength can be achieved, e.g., by a lattice structure (e.g. a grid-like or honey- comb structure) of the respective tip plate (body) section and changes in the thickness of said respective section. One option is to use a material of different mechanical properties (compared with an adjacent section in the x-y- direction) for at least one section of the tip plate.

Additionally or alternatively at least one section can be made of a material of different thermal conductivity to alter the respective temperature of this section by means of the so called Joule heating effect, known as such to the skilled person.

Similarly, sections of the tip plate, featuring lower temperatures in known constructions (as sections A and E in Fig. 1), may be designed of reduced thickness (seen in the flow direction of the metal melt through the nozzles, which is the z-direction) to increase the amount of heat generated in that section.

These features may be combined to produce a bespoke design of a tip plate and corresponding bushing.

In its most general embodiment the invention relates to a tip plate for a bushing for receiving a high-temperature melt as defined in claim 1, comprising - in its operational position - an upper surface, which extends in an x-y-direction of the coordinate system, a lower surface at a distance to the upper surface and a body in between, as well as a multiplicity of nozzle like through-openings, extending at least between the upper surface and the lower surface, through which the melt may leave the bushing in a z- direction of the coordinate system, wherein at least two sections of the tip plate, adjoining each other in the x-y-direction of the coordinate system, have different physical properties, different chemical compositions or both. The individual sections of the tip plate can be discrete or feature a gradual transition into one another.

The term "body" defines the part of the tip plate between upper surface and lower surface but does not include the through openings (nozzles, nozzle areas). Similarly the upper surface and/or the lower surface represent additional sections of the tip plate (besides the body).

According to one embodiment the upper surface of the tip plate is a "closed" surface (with the exception of the area of the through openings) to keep the glass melt within in the bushing unless drawn off via said through openings/nozzles. In other words and seen from above: the upper surface is continuous and comprises numerous through openings, used as or provided to integrate (discrete) nozzles, which at their lower end may protrude the lower surface of the tip plate.

The lower surface of the tip plate (bottom of the bushing) is not necessarily closed (in the sense as defined before with respect to the upper surface). This allows to design any sections of the tip plate below its upper surface in a new and favorable pattern, i.e. with different structural features compared with the "solid" prior art design.

An embodiment provides a tip plate, wherein at least one section is produced by additive manufacturing, also called 3 D printing. Additive manufacturing allows the realization of nearly unlimited structural features, e.g. to adapt the physical (in particular structural) properties of the respective section or sections, which will be described in more detail hereinafter.

The tip plate can be designed in a way that at least 50%, or at least 70%, or at least 85% of its volume are produced by additive manufacturing, which can also be 100%. One or more sections can be manufactured separately and then assembled to one common tip plate (e.g. by welding). It is also possible to produce the tip plate (all its sections) in one common additive manufacturing process and thus to achieve one common monolithic tip plate. Both embodiments allow to provide transition zones between adjoining tip plate sections in a bespoke manner as disclosed above.

Another embodiment of the invention features at least one section below the upper surface with at least one hollow space. This hollow space can be a closed pore, a sack pore (depression), which extends from below towards the upper surface, a slit, which extends substantially parallel to the upper surface in or into the tip plate body and/or any other structural means. This embodiment includes a design wherein the hollow spaces are arranged between a closed upper surface and a closed lower surface.

According to another embodiment the at least one (further) section below the upper surface features a lattice structure such as a grid-like structure, e.g. a honey-comb structure. Again, this embodiment may also be realized with a closed lower body surface. Additive manufacturing allows structures which allow a bespoke design of the respective tip plate for a certain application. The corresponding software program can be stored and used again at any time later to produce a 1:1 copy of the section(s) or tip plate, enabling very constant manufacturing conditions with manufacturing tolerances towards zero, even over a very long production time and independently of any replacement of a used tip plate by a new one.

The aforementioned options lead to good strengths of corresponding sections although substantially less material being required.

Sections with structures of reduced density (like a grid like structure) either lead to a reduction of material and costs or may be used to increase the overall thickness of the tip plate (without requiring more material compared with solid prior art constructions) in that section(s) , which also leads to an increase in mechanical strength.

The service life of generic tip plates is often limited by a deformation of the bushing's bottom under the load of the glass melt. In such cases the bushings have to be replaced by new ones, interrupting the production line, increasing the costs and increasing the risk of producing glass fibres of different behavior by the new bushing. The new design allows a longer service life and improved quality of the produced fibres.

Another option is to vary the distance between the upper surface and the lower surface of at least one section compared to at least one adjoining (adjacent) section in the x-y-direction of the coordinate system. In other words: This embodiment is characterized by a tip plate, wherein the distance between the upper surface and the lower surface of at least one section is different to the distance between the upper surface and the lower surface of at least one adjoining section.

Adjoining sections may be arranged substantially parallel to each other, or as substantially concentric rings, may have border lines which follow an involute profile or an oval shape or any other design, in each case depending on the local conditions.

The lower surface of the body can be a physically closed surface (as is the upper surface) or a virtual (imaginary) surface in case of hollow structures (grid like structures, honey comb structures etc. or structures featuring depressions from below towards to upper surface) as disclosed.

All these options according to the invention lead to a considerable reduction of material costs, which is important because of the expensive materials like Platinum and Rhodium, used as primary metals for said bushings and its parts.

At least two adjoining sections can be made of different metal alloys and/or metal alloys of different thermal conductivity to achieve similar results, i.e. different thermal conductivity and/or different structural integrity (e.g. strength) at sections where required. For example one section can be made of a PtRh alloy with 90m-% Platinum and 10m-% Rhodium, while the adjacent section is made of a PtRh alloy of 80m% Platinum and 20m% Rhodium.

While variations in the structure and/or chemistry of the tip plate were impossible to realize in metal sheets according to prior art, the new concept may be easily realized by additive manufacturing, also referred to as 3D printing technology or 3D laser printing.

Even extreme structures, undercuts, thinnest partition walls etc. can be realized in additive manufacturing, as the final shape is built up subsequently (step by step) in numerous individual "printing" steps, allowing to modify the layout (physical structure) between subsequent manufacturing sequences. This is also true with respect to the preferred metals and metal alloys used for bushings of the kind mentioned.

Additive manufacturing allows further advantages:
- the precision is higher than the manufacturing (casting, punching) of metal sheets according to prior art
- a higher precision leads to less material loss during manufacturing
- less material is required, which lowers the overall costs
- a 3D printer may be installed everywhere, even at a glass fiber manufacturer's site
- no changes in the outer design of the bushing and its parts being necessary, i.e. tip plates and bushings according to the invention can replace tip plates and bushings of prior art 1:1
- different laser intensities during additive manufacturing allow further variations of the physical properties (structure) of the tip plate
- through openings and/or nozzles can be integrated in-situ during additive manufacturing, i.e. no additional manufacturing step being necessary, no welding etc., which saves time, costs and increases the precision
- high precision of the dimensions and in particular the cross section of the through openings (nozzles) leads to improved glass fibre dimensions and glass fibre properties.

The invention further refers to a bushing for receiving a high-temperature melt, comprising a tip plate as mentioned before and a wall, extending into one common direction from said tip plate, i.e. upwardly in its use (operation) position, substantially corresponding to the z-direction as mentioned before.

The tip plate may have a rectangular shape in a top view and four wall segments, extending therefrom in the same direction, thus limiting a cuboid space for the melt, wherein the wall segments are tightly connected to the tip plate, e.g. by welding or - to its best - in a common additive manufacturing method. At least one section of the tip plate or the tip plate in total can be designed by additive manufacturing, although theoretically structural modifications can also be realized by cutting etc.

At least two wall segments of the bushing, arranged at a distance to each other, are designed to be connected to or may be connected to an electric power supply to allow heating of the glass melt in the bushing, typically by direct current, although other heating methods are not critical.

Further features of the invention will become apparent from the sub-claims as well as the remaining filing documents. These features may be combined if not explicitly excluded or technically useless.

The invention will now be described in more detail by reference to the attached schematic drawing, featuring the following:
Fig. 2: a vertical cross section of a bushing according to the invention, including embodiments F-J of a tip plate according to invention

Fig. 3: side and top views according to Fig. 1 of a tip plate according to the invention

Fig. 4: a further embodiment of a tip plate according to the invention in a cross sectional presentation.

In the Figures the same parts or parts of substantially equivalent function or behavior are characterized by the same numerals.

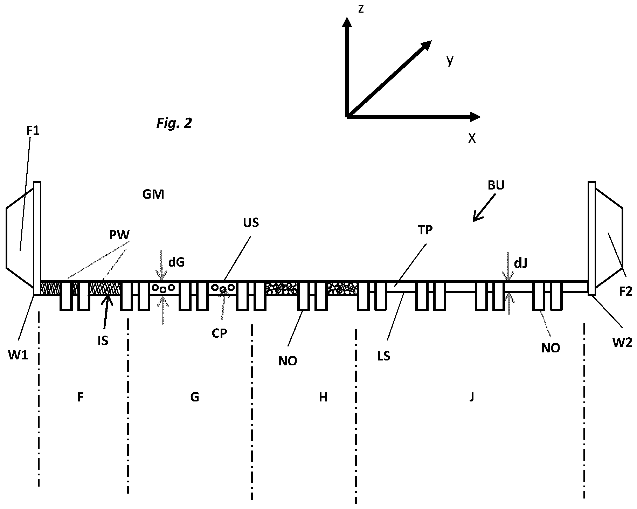

Fig. 2 displays a bushing BU which comprises a rectangular (bottom) tip plate TP with an upper surface US and a lower surface LS, between which the tip plate TP defines a body BO and through holes designed as corresponding nozzles NO, as well as four side walls, two of which (W1, W2) are displayed, together defining a space for a glass melt GM, present on the upper surface US and extracted therefrom via said nozzles NO (the flow - by gravity - and the flow direction substantially correspond to the z-direction, see attached coordinate system).

Side wall W1, W2 and tip plate TP are made of a PtRh alloy (90m%Pt, 10m%Rh) and welded to each other.

Tip plate TP was designed by additive manufacturing, i.e. in a 3D laser printer, by forming one thin layer of a fine alloy powder (particles <100µm] on top of the other in successive manufacturing steps and melting the powder material by laser beams according to a predefined pattern until the final design has been reached.

Fig. 2 schematically displays four embodiments of possible designs for the tip plate TP, named F to J, which can be realized individually or in arbitrary combinations, depending on the specific glass melt, electric power and overall sizes of the bushing.

Section F is characterized as follows:
Below the "closed" upper surface US is a section featuring a lattice structure, defined by thin partition walls PW arranged in a zig zag pattern and substantially "open" downwardly, i.e. in this embodiment the lower surface LS of the tip plate is defined by an imaginary surface IS, (generally parallel to the upper surface US), from which depressions extend upwardly, in the z-direction, towards the upper surface US.

Section F requires ca. 30% less alloy material compared with a solid section, although its mechanical strength is very high. The thermal behavior is such that section F achieves a higher temperature compared with a solid plate construction.

This design may, for example, be used in the hot spot area (C) of a tip plate TP similar to that of Fig. 1.

Section G differs from section F by a substantially closed lower surface LS, so that a thickness dG may be defined between upper and lower surface US, LS. The body material of section G is characterized by closed pores CP, which lower the density and weight of this section G compared to a throughout solid body material as used in prior art (Fig. 1). The number and size of said pores is only schematic and may be selected according to the local requirements.

Section H is similar to section G (thickness of section H= dG) but its structure features pores merging into each other, thus giving this section a sponge like structure.

Section J starts from a solid tip plate design, but is of substantially reduced thickness (dJ = 0,7 dG), allowing a 30% material reduction and cost reduction as well as an increase in temperature compared with a solid tip plate section of a thickness dG.

All sections of the tip plate of Fig. 2 can be produced by additive manufacturing, either separately or in one common manufacturing process.

Generally: sections of different properties can follow each other not only in the x-direction as displayed, but alternatively or additionally also in the y-direction.

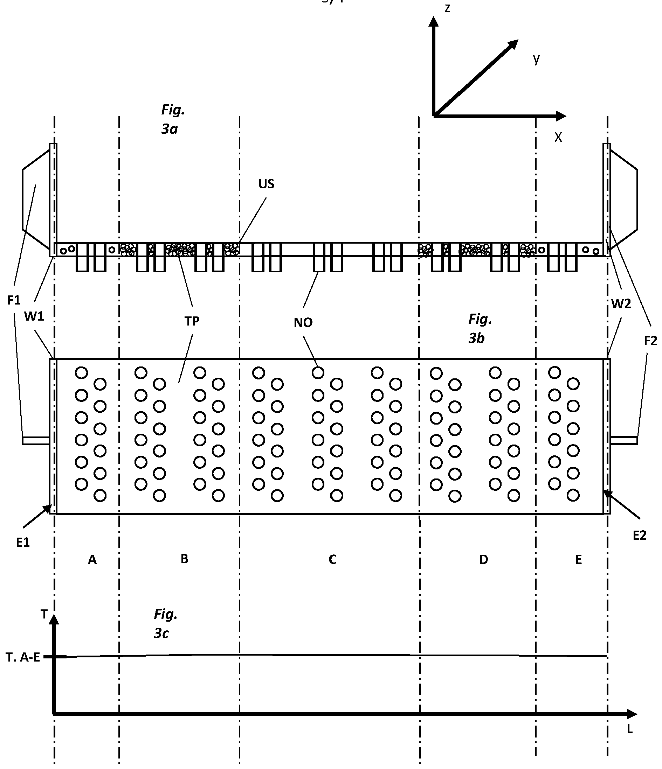

Fig. 3 displays the tip plate TP of generally same outer dimensions as that of Fig 1, but the tip plate of Fig. 3 was produced by additive manufacturing (3D laser printing) and with different structural features in different sections (A-E).

As illustrated in Fig. 3a, sections A and E have been modified and now feature relatively large pores to lower the density and thus increase the temperature in that section (under the proviso of same electrical power as according to the embodiment of Fig. 1). The overall (closed) porosity of these sections A,E is around 20% by volume.

Adjoining sections B,D in Fig. 3 again differ from sections B, D of Fig. 1 by inner pores, but less than and smaller ones compared to sections A,E, so that the total (closed) porosity of sections B,D being around 10 % by volume.

The center section C hasn't been changed between the embodiments of Fig. 1 and 3.

The different structural features of the tip plate TP of Fig. 3, compared with that of Fig. 1, shows, that the tip plate TP of Fig. 3 features a substantially constant temperature profile (symbolized in Fig. 3c as T.A-E) between ends E1 and E2 (walls W1, W2), namely a temperature similar to that of section C in Fig. 1.

To lower this temperature (if required) and thus to increase the life time of the tip plate of Fig. 3, the power supply can now be reduced, which again saves costs.

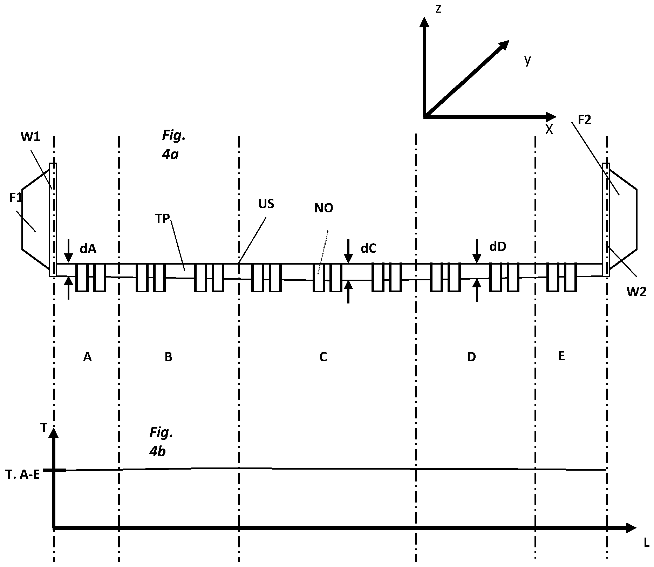

Fig. 4a displays a very basic improvement over prior art according to Fig. 1 in that just the thickness of the tip plate TP is varied between opposite ends at W1,W2. While the shape of the upper surface US of the tip plate corresponds to that according to Fig. 1, the lower surface LS of the embodiment in Fig. 4 is designed in a curved way. Thickness dA in section A is the lowest and increases substantially continuously towards section C, which thickness dC being the largest in that embodiment (dC being ca. 1,5 dA)and then decreases again towards sections D and E, with dD being slightly larger (ca. 15%) than dA. Just by these means, which can be realized by additive manufacturing in a bespoke way without problems, the temperature distribution within the tip plate TP can be homogenized as displayed in Fig. 4b.

Generally spoken this embodiment is represented by a convex shape (curved, arched, cambered shape) of the lower surface and/or the upper surface of the tip plate in any/all direction(s) of the coordinate system. In other words: The tip plate may also feature a curved upper surface in the y-direction (and not only in the x-direction as shown). A smooth surface without steps is preferred to achieve a most homogeneous temperature distribution and strength within a tip plate of this embodiment defined by variations in its thickness. Further features of the invention as disclosed in connection with Fig. 2,3 may also be integrated into this embodiment.

Nozzles NO in all Figures have been displayed in a highly schematic way for better illustration. Typically up to 8000 nozzles (tips) are arranged within one tip plate.

The advantages of the new design are as follows:
- it requires much less material and thus is much cheaper
- it leads to a substantially homogeneous temperature distribution over the complete surface area
- it is much more precise in its dimensions
- the nozzles NO can be formed in situ during additive manufacturing and with higher precision, therefore also
- a larger number of nozzles per surface area may be integrated, leading to a higher production rate per surface area
- the mechanical strength of the tip plate has increased and thus replacement of the bushing is only required after an extended service time
- a constant quality.

## Claims

1. Tip plate (TP) for a bushing (BU) for receiving a high-temperature melt (GM), comprising - in its operational position - an upper surface (US), which extends in an x-y-direction of the coordinate system, a lower surface (LS) at a distance (d) to the upper surface (US) and a body (BO) in between, as well as a multiplicity of nozzle like through-openings (NO), extending at least between the upper surface (US) and the lower surface (LS), through which the melt (GM) may leave the bushing (BU) in a z-direction of the coordinate system, wherein at least two sections (A-B, B-C, C-D, D-E, F-G, G-H, H-J) of the tip plate (TP) , adjoining each other in the x-y-direction of the coordinate system, have different physical properties, different chemical composition or both so that a temperature distribution within the tip plate (TP) is homogenized over the complete surface area.

2. Tip plate (TP) according to claim 1, wherein at least one section (A...J) is an additive manufacturing product.

3. Tip plate (TP) according to claim 2, with at least 50% of its volume is an additive manufacturing product.

4. Tip plate (TP) according to claim 1, wherein the upper surface (US) is a closed surface with the exception of the areas of the through openings (NO).

5. Tip plate (TP) according to claim 1, wherein at least one depression (DE) extends from the lower surface (LS) of at least one section (F) into the body (BO).

6. Tip plate (TP) according to claim 1, wherein at least one section (A, B, D, E, G, H) below the upper surface (US) features at least one hollow space (CP).

7. Tip plate (TP) according to claim 1, wherein at least one section (F) below the upper surface (US) features a lattice structure.

8. Tip plate (TP) according to claim 1, wherein the distance (dJ) between the upper surface (US) and the lower surface (LS) of at least one section (J) is different to the distance (dH) between the upper surface (US) and the lower surface (LS) of at least one adjoining section (H).

9. Tip plate (TP) according to claim 1, wherein at least two adjoining sections are made of different metal alloys.

10. Tip plate (TP) according to claim 1, comprising at least ninety mass percent of a PtRh alloy.

11. Bushing (BU) for receiving a high-temperature melt (GM), comprising a tip plate (TP) according to claim 1 and at least one wall (W1,2), extending from said tip plate (TP) into the z-direction.

12. Bushing (BU) according to claim 11, wherein the tip plate (TP) has a rectangular shape in a top view and four wall segments (W1, W2) extending therefrom in the same direction, thus limiting a cuboid space for the melt (GM), wherein the wall segments (W1, W2) are tightly connected to the tip plate (TP).

13. Bushing (BU) according to claim 11, with at least two wall segments (W1, W2) being arranged at a distance to each other and connected to an electric power supply (F1, F2).

14. Bushing (BU) according to claim 10, wherein at least one section (A...J) of the tip plate (TP) is an additive manufacturing product.

15. Bushing (BU) according to claim 10 with a tip plate (TP) which is an additive manufacturing product.

## Patentansprüche

1. Spitzenplatte (TP) für eine Durchführung (BU) zur Aufnahme einer Hochtemperaturschmelze (GM), umfassend - in ihrer Betriebsposition - eine obere Fläche (US), die sich in einer x-y-Richtung des Koordinatensystems erstreckt, eine untere Fläche (LS) in einem Abstand (d) zur oberen Fläche (US) und einen Körper (BO) dazwischen sowie eine Vielzahl von düsenartigen Durchgangsöffnungen (NO), die sich zumindest zwischen der oberen Fläche (US) und der unteren Fläche (LS) erstrecken, durch die die Schmelze (GM) die Durchführung (BU) in einer z-Richtung des Koordinatensystems verlassen kann, wobei mindestens zwei Abschnitte (A-B, B-C, C-D, D-E, F-G, G-H, H-J) der Spitzenplatte (TP), die in der x-y-Richtung des Koordinatensystems aneinandergrenzen, unterschiedliche physikalische Eigenschaften, eine unterschiedliche chemische Zusammensetzung oder beides aufweisen, so dass eine Temperaturverteilung innerhalb der Spitzenplatte (TP) über den gesamten Flächenbereich homogenisiert wird.

2. Spitzenplatte (TP) nach Anspruch 1, wobei mindestens ein Abschnitt (A...J) ein additives Fertigungsprodukt ist.

3. Spitzenplatte (TP) nach Anspruch 2, wobei mindestens 50 % ihres Volumens ein additives Fertigungsprodukt ist.

4. Spitzenplatte (TP) nach Anspruch 1, wobei die obere Fläche (US) mit Ausnahme der Bereiche der Durchgangsöffnungen (NO) eine geschlossene Fläche ist.

5. Spitzenplatte (TP) nach Anspruch 1, wobei sich mindestens eine Vertiefung (DE) von der unteren Fläche (LS) mindestens eines Abschnitts (F) in den Körper (BO) erstreckt.

6. Spitzenplatte (TP) nach Anspruch 1, wobei mindestens ein Abschnitt (A, B, D, E, G, H) unterhalb der oberen Fläche (US) über mindestens einen Hohlraum (CP) verfügt.

7. Spitzenplatte (TP) nach Anspruch 1, wobei mindestens ein Abschnitt (F) unterhalb der oberen Fläche (US) über eine Gitterstruktur verfügt.

8. Spitzenplatte (TP) nach Anspruch 1, wobei der Abstand (dJ) zwischen der oberen Fläche (US) und der unteren Fläche (LS) mindestens eines Abschnitts (J) unterschiedlich zu dem Abstand (dH) zwischen der oberen Fläche (US) und der unteren Fläche (LS) mindestens eines angrenzenden Abschnitts (H) ist.

9. Spitzenplatte (TP) nach Anspruch 1, wobei mindestens zwei aneinandergrenzende Abschnitte aus unterschiedlichen Metalllegierungen bestehen.

10. Spitzenplatte (TP) nach Anspruch 1, umfassend mindestens neunzig Massenprozent einer PtRh-Legierung.

11. Durchführung (BU) zur Aufnahme einer Hochtemperaturschmelze (GM), umfassend eine Spitzenplatte (TP) nach Anspruch 1 und mindestens eine Wand (W1,2), die sich von der Spitzenplatte (TP) in die z-Richtung erstreckt.

12. Durchführung (BU) nach Anspruch 11, wobei die Spitzenplatte (TP) in einer Draufsicht eine rechteckige Form und vier Wandsegmente (W1, W2) aufweist, die sich davon in der gleichen Richtung erstrecken, wodurch ein quaderförmiger Raum für die Schmelze (GM) begrenzt wird, wobei die Wandsegmente (W1, W2) fest mit der Spitzenplatte (TP) verbunden sind.

13. Durchführung (BU) nach Anspruch 11, wobei mindestens zwei Wandsegmente (W1, W2) in einem Abstand zueinander angeordnet und mit einer elektrischen Leistungsversorgung (F1, F2) verbunden sind.

14. Durchführung (BU) nach Anspruch 10, wobei mindestens ein Abschnitt (A...J) der Spitzenplatte (TP) ein additives Fertigungsprodukt ist.

15. Durchführung (BU) nach Anspruch 10 mit einer Spitzenplatte (TP), die ein additives Fertigungsprodukt ist.

## Revendications

1. Plaque d'extrémité (TP) pour une filière (BU) destinée à recevoir une masse fondue (GM) à haute température, comprenant - dans sa position opérationnelle - une surface supérieure (US), qui s'étend dans une direction x-y du système de coordonnées, une surface inférieure (LS) à une distance (d) de la surface supérieure (US) et un corps (BO) entre elles, ainsi qu'une multiplicité de d'ouvertures traversantes (NO) analogues à des buses, s'étendant au moins entre la surface supérieure (US) et la surface inférieure (LS), à travers lesquelles la masse fondue (GM) peut quitter la filière (BU) dans une direction z du système de coordonnées, dans laquelle au moins deux sections (A-B, B-C, C-D, D-E, F-G, G-H, H-J) de la plaque d'extrémité (TP), adjacentes l'une à l'autre dans la direction x-y du système de coordonnées, ont des propriétés physiques différentes, une composition chimique différente ou les deux de sorte qu'une distribution de température à l'intérieur de la plaque d'extrémité (TP) soit homogénéisée sur la superficie complète.

2. Plaque d'extrémité (TP) selon la revendication 1, dans laquelle au moins une section (A...J) est un produit de fabrication additif.

3. Plaque d'extrémité (TP) selon la revendication 2, au moins 50 % de son volume étant un produit de fabrication additif.

4. Plaque d'extrémité (TP) selon la revendication 1, dans laquelle la surface supérieure (US) est une surface fermée à l'exception des zones des ouvertures traversantes (NO).

5. Plaque d'extrémité (TP) selon la revendication 1, dans laquelle au moins une dépression (DE) s'étend à partir de la surface inférieure (LS) d'au moins une section (F) jusque dans le corps (BO).

6. Plaque d'extrémité (TP) selon la revendication 1, dans laquelle au moins une section (A, B, D, E, G, H) au-dessous de la surface supérieure (US) présente au moins un espace creux (CP).

7. Plaque d'extrémité (TP) selon la revendication 1, dans laquelle au moins une section (F) au-dessous de la surface supérieure (US) présente une structure en treillis.

8. Plaque d'extrémité (TP) selon la revendication 1, dans laquelle la distance (dJ) entre la surface supérieure (US) et la surface inférieure (LS) d'au moins une section (J) est différente de la distance (dH) entre la surface supérieure (US) et la surface inférieure (LS) d'au moins une section adjacente (H).

9. Plaque d'extrémité (TP) selon la revendication 1, dans laquelle au moins deux sections adjacentes sont constituées d'alliages métalliques différents.

10. Plaque d'extrémité (TP) selon la revendication 1, comprenant au moins quatre-vingt-dix pour cent en masse d'un alliage PtRh.

11. Filière (BU) pour recevoir une masse fondue (GM) à haute température, comprenant une plaque d'extrémité (TP) selon la revendication 1 et au moins une paroi (W1,2), s'étendant à partir de ladite plaque d'extrémité (TP) dans la direction z.

12. Filière (BU) selon la revendication 11, dans laquelle la plaque d'extrémité (TP) a une forme rectangulaire dans une vue de dessus et quatre segments de paroi (W1, W2) s'étendant à partir de celle-ci dans la même direction, limitant ainsi un espace cuboïde pour la masse fondue (GM), les segments de paroi (W1, W2) étant étroitement raccordés à la plaque d'extrémité (TP).

13. Filière (BU) selon la revendication 11, avec au moins deux segments de paroi (W1, W2) agencés à distance l'un de l'autre et raccordés à une alimentation électrique (F1, F2).

14. Filière (BU) selon la revendication 10, dans laquelle au moins une section (A...J) de la plaque d'extrémité (TP) est un produit de fabrication additif.

15. Filière (BU) selon la revendication 10 avec une plaque d'extrémité (TP) qui est un produit de fabrication additif.
